# EUROPEAN PATENT APPLICATION

(11) **EP 4 618 606 A1**
(43) Date of publication of application: **17.09.2025**
(21) Application number: 25161907.8
(22) Date of filing: 05.03.2025
(51) Int. Cl.: H04W 12/08, H04W 4/50, H04W 4/70, H04W 4/80, H04W 12/086, H04W 12/50

(54) **CLOUD-BASED THREAD NETWORK COMMISSIONING**

(30) Priority: 15.03.2024 US 202463565811 P
(71) Applicant: GOOGLE LLC, Mountain View CA 94043 (US)
(72) Inventor: Yakun, Xu, Mountain View, 94043 (US); Choi, Yoon Hyung, Mountain View, 94043 (US); Yu, Han Jong, Mountain View, 94043 (US); Hui, Jonathan Wing-Yan, Mountain View, 94043 (US)
(74) Representative: Maikowski & Ninnemann Patentanwälte Partnerschaft mbB

(57) **Abstract**

Techniques and devices for maintaining network connectivity on a Thread network are described in which a Thread Credential Distribution Service (TCDS) receives a first message requesting credentials for the Thread network and based on the reception of the first message, the TCDS sends, to a home graph service, a second message that requests a structure identifier. The TCDS receives a third message that includes the structure identifier and based on the received structure identifier, sends a fourth message that directs the wireless network device to join the Thread network.

## Description

### CROSS-REFERENCE TO RELATED APPLICATION(S)

This application claims the benefit of U.S. Provisional Patent Application Serial No. 63/565,811 filed on March 15, 2024.

### BACKGROUND

Using wireless networking to connect devices to each other, and to cloud-based services, is increasingly popular for sensing environmental conditions, controlling equipment, and providing information and alerts to users. Many devices on wireless networks are designed to operate for extended periods of time on battery-power, which limits the available computing, user interface, and radio resources in these devices. Additionally, to ensure the security of mesh networks, the identity of devices joining and operating on a mesh network is authenticated, and communication within the mesh network is encrypted, based on credentials that are commissioned into the devices. However, with the increasing ubiquity and scale of mesh networks, commissioning techniques limit the quality of user experience for commissioning, the accuracy of joining a device to the correct mesh network, securely injecting credentials into the devices, and provisioning device-specific and application-specific information into a device during commissioning.

### SUMMARY

This summary is provided to introduce concepts of cloud-based Thread network commissioning, generally related to commissioning wireless network devices to Thread networks using a cloud-based Thread Credential Distribution Service (TCDS). The concepts are further described below in the Detailed Description. This summary is not intended to identify essential features of the claimed subject matter, nor is it intended for use in determining the scope of the claimed subject matter.

In aspects, methods, devices, systems, and means for cloud-based Thread network commissioning are described for commissioning a wireless network device to a Thread network by a Thread Credential Distribution Service (TCDS) that receives a first message requesting credentials for the Thread network and based on the reception of the first message, the TCDS sends, to a home graph service, a second message that requests a structure identifier. The TCDS receives a third message that includes the structure identifier and based on the received structure identifier, sends a fourth message that directs the wireless network device to join the Thread network.

In aspects, methods, devices, systems, and means for cloud-based Thread network commissioning are described for commissioning a wireless network device to a Thread network by a commissioning device that sends a second message to a wireless network device that directs the wireless network device to scan for Thread networks and receives a third message that includes a discovery response from the Thread network scan performed by the wireless network device. The commissioning device sends a fourth message to a Thread Credential Distribution Service (TCDS) that includes results of the received Thread network scan and receives, from the TCDS, a Thread credentials Universally Unique Identifier (UUID), a network identifier for a Thread network to join, and a network version. The commissioning device sends a fifth message to the TCDS to request credentials for the Thread network, receives the credentials for the Thread network, includes the received credentials for the Thread network into a sixth message, and sends the sixth message to the wireless network device that directs the wireless network device to join the Thread network.

### BRIEF DESCRIPTION OF THE DRAWINGS

Aspects of cloud-based Thread network commissioning are described with reference to the following drawings. The same numbers are used throughout the drawings to reference like features and components:
FIG. 1 illustrates an example network environment in which various aspects of cloud-based Thread network commissioning can be implemented.
FIG. 2 illustrates an example environment in which various aspects of cloud-based Thread network commissioning can be implemented.
FIG. 3 illustrates an example system in which various aspects of cloud-based Thread network commissioning can be implemented.
FIG. 4 illustrates data and control transactions between devices for commissioning a wireless network device in accordance with aspects of cloud-based Thread network commissioning.
FIG. 5 illustrates data and control transactions between devices for commissioning a wireless network device in accordance with aspects of cloud-based Thread network commissioning.
FIG. 6 illustrates data and control transactions between devices for commissioning a wireless network device in accordance with aspects of cloud-based Thread network commissioning.
FIGs. 7a and 7b illustrate data and control transactions between devices for commissioning a wireless network device in accordance with aspects of cloud-based Thread network commissioning.
FIG. 8 illustrates data and control transactions between devices for passive migration of a wireless network device in accordance with aspects of cloud-based Thread network commissioning.
FIG. 9 illustrates data and control transactions between devices for active migration of a wireless network device in accordance with aspects of cloud-based Thread network commissioning.
FIG. 10 illustrates an example method for a network node in accordance with one or more aspects of the techniques described herein.
FIG. 11 illustrates an example method for a network node in accordance with one or more aspects of the techniques described herein.
FIG. 12 illustrates an example environment in which aspects of the techniques described herein can be implemented.
FIG. 13 illustrates an example wireless network device that can be implemented in a home area network in accordance with one or more aspects of the techniques described herein.
FIG. 14 illustrates an example system with an example device that can implement aspects of cloud-based Thread network commissioning.

### DETAILED DESCRIPTION

This document illustrates aspects of cloud-based Thread network commissioning. To provide greater flexibility than systems where commissioning is associated with a user account, cloud-based network commissioning stores Thread network credentials in a cloud service. Cloud-based Thread network commissioning increases flexibility for a user by enabling the user to employ various first-party and third-party devices to commission a Thread device in network environments, such as a Matter networking environment, by retrieving commissioning credentials from a cloud-based service.

### Example Environment

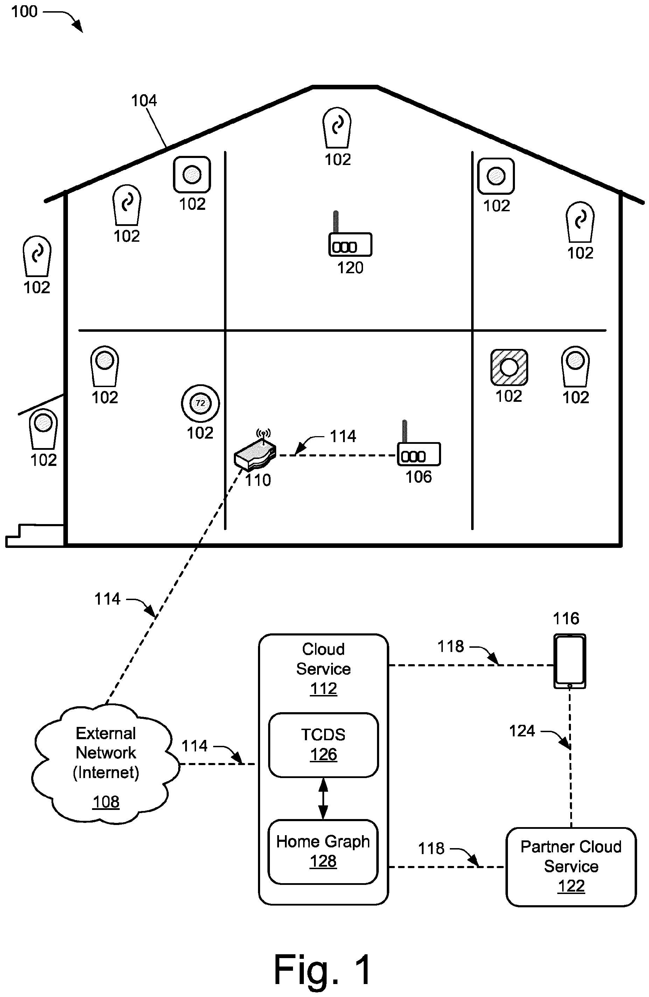

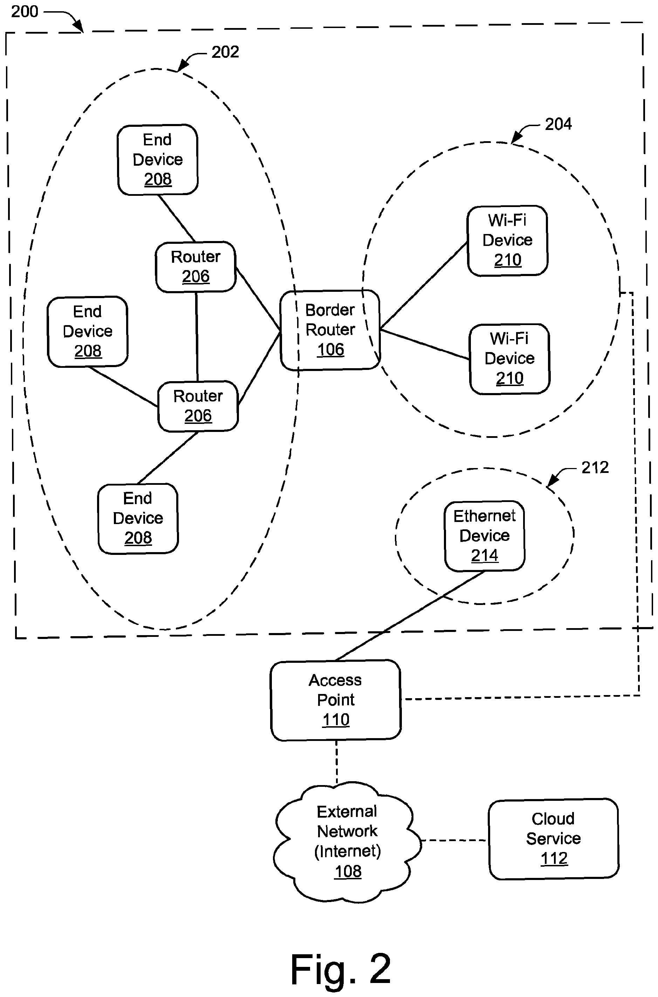

FIG. 1 illustrates an example network environment 100 in which aspects of cloud-based Thread network commissioning can be implemented. The network environment 100 (e.g., a fabric network, a Thread network (a network using "Thread" which is an IPv6-based, low-power mesh networking technology of the Thread Group alliance and referred to herein in its version 1.4.0 or later), a Matter network (a network using "Matter" which relates to a connectivity standard as issued by the Connectivity Standards Alliance, CSA and referred herein in its Version 1.0 or later), a Weave network (a network using "Weave" which is a network application layer protocol and referred to herein in its version released in June 2017 or later)) includes one or more network segments that form a home area network (HAN) such as a HAN 200, described below with respect to FIG. 2. The HAN includes wireless network devices 102 that are disposed about a structure 104, such as a house, and are connected by one or more wireless and/or wired network technologies, as described below. The HAN includes a wireless network device 102 that acts as a border router 106 that connects the HAN to an external network 108 (access network 108), such as the Internet, through a home router or access point 110.

To provide user access to functions implemented using the wireless network devices 102 in the HAN, a cloud service 112 connects to the HAN via border router 106, via a secure tunnel 114 through the external network 108 (access network 108) and the access point 110. The cloud service 112 facilitates communication between the HAN and internet clients 116, such as apps on mobile devices, using a web-based application programming interface (API) 118. The cloud service 112 also manages a home graph 128 (home graph service 128) that describes connections and relationships between the wireless network devices 102, elements of the structure 104, and users. The home graph 128 stores Thread network credentials that are accessed through a Thread Credential Distribution Service 126 (TCDS 126). The TCDS 126 securely stores and distributes Thread network credentials. The cloud service 112 hosts controllers which orchestrate and arbitrate home automation experiences, as described in greater detail below.

The HAN may include one or more wireless network devices 102 that function as a hub 120. The hub 120 may be a general-purpose home automation hub, or an application-specific hub, such as a security hub, an energy management hub, an HVAC hub, and so forth. The functionality of a hub 120 may also be integrated into any wireless network device 102, such as a smart thermostat device, a network-enabled television, a media streaming device, or the border router 106. In addition to hosting controllers on the cloud service 112, controllers can be hosted on any hub 120 in the structure 104, such as the border router 106. A controller hosted on the cloud service 112 can be moved dynamically to the hub 120 in the structure 104, such as moving an HVAC zone controller to a newly installed smart thermostat. Hosting functionality on the hub 120 in the structure 104 can improve reliability when the user's internet connection is unreliable, can reduce latency of operations that would normally have to connect to the cloud service 112, and can satisfy system and regulatory constraints around local access between wireless network devices 102.

The wireless network devices 102 in the HAN may be from a single manufacturer that provides the cloud service 112 as well, or the HAN may include wireless network devices 102 from partners. These partners may also provide partner cloud services 122 that provide services related to their wireless network devices 102 through a partner Web API 124. The partner cloud service 122 may optionally or additionally provide services to internet clients 116 via the web-based API 118, the cloud service 112, and the secure tunnel 114.

The network environment 100 can be implemented on a variety of hosts, such as battery-powered microcontroller-based devices, line-powered devices, and servers that host cloud services. Protocols operating in the wireless network devices 102 and the cloud service 112 provide a number of services that support operations of home automation experiences in the distributed computing environment 100. These services include, but are not limited to, real-time distributed data management and subscriptions, command-and-response control, real-time event notification, historical data logging and preservation, cryptographically controlled security groups, time synchronization, network and service pairing, and software updates.

FIG. 2 illustrates an example environment (e.g., a fabric network, a Weave network, a Matter network) in which various aspects of cloud-based Thread network commissioning can be implemented. The home area network (HAN, Thread network) 200 may include a wireless mesh network segment 202 (e.g., a Thread network segment), a Wi-Fi network segment 204, and/or an Ethernet segment 212. The mesh network segment 202 is a Wireless Personal Area Network (WPAN) implementing the Thread Specification, in particular the Thread Specification 1.0, 1.1, 1.2, 1.3, 1.4, or any later version. For example, the mesh network segment 202 may be compatible with version 1.1, version 1.2, and/or version 1.3 of the Thread Specification. The Wi-Fi segment 204 is a Wireless Local Area Network (WLAN) implementing the IEEE 802.11 standard, in particular the IEEE 802.11 standard of 1997 and/or any later version such as 802.11b, 802.11g, 802.11n, 802.11ac, 802.11ax, 802.11ad, 802.11ay, and 802.11be. For example, the Wi-Fi segment 204 may be compatible with one or more, e.g. all, of these versions. The wireless mesh network segment 202 includes routers 206 and end devices 208. The routers 206 and the end devices 208, each include a mesh network interface for communication over the mesh network segment 202. The routers 206 receive and transmit packet data over the mesh network interface. The routers 206 also route traffic across the mesh network segment 202. The end devices 208 are devices that can communicate using the mesh network segment 202, but lack the capability, beyond simply forwarding to its parent router 206, to route traffic in the mesh network segment 202. One or more of the end devices 208 may be battery powered. For example, a battery-powered sensor is one type of end device 208. The Wi-Fi network segment 204 includes Wi-Fi devices 210. Each Wi-Fi device 210 includes a Wi-Fi network interface for communication over the Wi-Fi network segment 204. Optionally or additionally, the HAN 200 can include an Ethernet network segment 212 that includes one or more Ethernet devices 214 that connect to the border router 106 or the access point 110. The Ethernet network segment 212 may be compatible with the IEEE 802.3 standard of any version, e.g., 802.3cu or any prior version.

The border router 106 is included in the wireless mesh network segment 202 and is included in the Wi-Fi network segment 204. The border router 106 includes a mesh network interface for communication over the mesh network segment 202 and a Wi-Fi network interface for communication over the Wi-Fi network segment 204. The border router 106 routes packets between devices in the wireless mesh network segment 202 and the Wi-Fi network segment 204. The border router 106 also routes packets between devices in the HAN 200 and external network nodes (e.g., the cloud service 112) via the access network 108, such as the Internet, through a home router or access point 110.

The devices in the mesh network segment 202, the Wi-Fi network segment 204, and the Ethernet network segment 212 use standard IP routing configurations to communicate with each other through transport protocols such as the User Datagram Protocol (UDP) or the Transmission Control Protocol (TCP). When the devices in the mesh network segment 202, the Wi-Fi network segment 204 and/or the Ethernet network segment 212 are provisioned as part of a Weave network, a fabric network, or a Matter network, the devices can communicate messages over those same UDP and/or TCP transports.

### Cloud-based Thread Network Commissioning

To assist devices in a home structure to converge into a single Thread network, each home structure associates with a single Thread network called the structure's default Thread network. When a new Thread device (e.g., a wireless network device 102, a border router 106) is added into a home structure, it should join this default network. When the default Thread network of a home structure is changed, all border routers 106 and wireless network devices 102 in the home structure should migrate to the new default Thread network. The default Thread network will only be updated after a border router 106 is migrated to a new network partition and uploads the Thread credentials for the new network partition to the TCDS 126 when the border router 106 and any wireless network devices 102 in the new network partition are migrated to the new network partition.

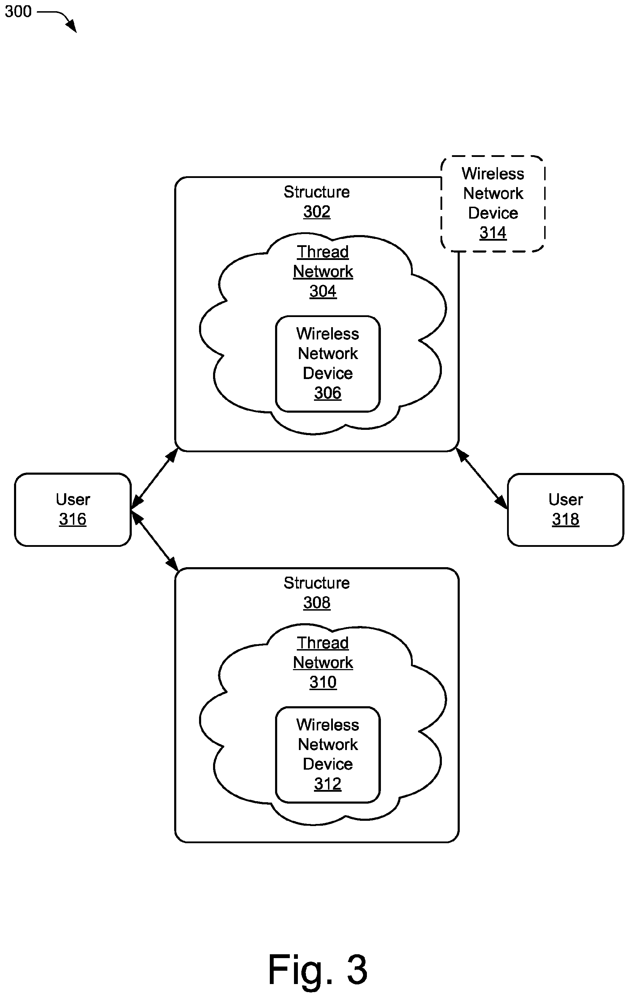

FIG. 3 illustrates an example of a system 300 with which aspects of cloud-based Thread network commissioning can be implemented. System 300 illustrates authorization in a system such as those illustrated in FIGs. 1 and 2. A first structure 302 includes a Thread network 304 which in turn includes a wireless network device 306 (e.g., a wireless network device 102) that is commissioned to the Thread network 304. A second structure 308 includes a Thread network 310 which in turn includes a wireless network device 312 (e.g., a wireless network device 102) that is commissioned to the Thread network 310. Wireless network device 314 is presently uncommissioned and will be commissioned to the structure 302 (the Thread network 304). The Thread network 304 is the default Thread network of the structure 302 and the Thread network 310 is the default Thread network of the structure 308.

In the system 300, the user 316 is authorized to have access to the network credentials of the Thread network 304 and the Thread network 310. The user 318 is authorized to have access to the network credentials of the Thread network 304 but not to the credentials of the Thread network 310. Each commissioned wireless network device 102 has a copy of the network credentials for the Thread network to which it is commissioned. For example, the wireless network device 306 has a copy of the network credentials for the Thread network 304, and the wireless network device 312 has a copy of the network credentials for the Thread network 310. During the commissioning process for wireless device 314, wireless device 314 will receive a copy of the network credentials for the Thread network 304.

A user has access to credentials of a Thread network, if the user is the owner of the Thread network in the TCDS 126 or if the user is a manager of a home structure that owns the Thread network. A user owns a Thread network in the TCDS 126 if the user uploads the credentials for that Thread network to the TCDS 126. The ownership to the Thread network is lost after the user deletes the credentials for that Thread network (from a user device). A home structure owns a Thread network if at least one of its linked devices owns the Thread network in the TCDS 126. A device owns a Thread network in the TCDS 126, if the device uploads the credentials for that Thread network to the TCDS 126, but the ownership to that Thread network is lost immediately after the device uploads credentials for a new Thread network to the TCDS 126. A device has access to credentials of a Thread network, if that device is the owner of the network in the TCDS 126 or if the device is linked to a home structure that owns the Thread network.

By authorizing access to network credentials using the identity of a device instead of a user account, security of the network credentials is improved. For example, if the wireless network device 306 is compromised, it will only affect the structure 302, and not other structures owned by the user 316 (such as the structure 308). Further, authorizing access to network credentials using the identity of a device improves the efficiency of accessing network credentials from the TCDS 126 by removing the need to include a structure identifier in the request to access network credentials. Additionally, third-party devices can be identified by device identity to enable those third-party devices to access a default Thread network without requiring a user login.

By using a default Thread network for a structure, Thread devices do not need to access network credentials from other devices in a Thread network. Access to Thread network credentials is defined by a home structure owning its default Thread network, a user having access to a Thread network, if it is the owner of the network in the TCDS 126 or it is the manager of a home structure that owns the Thread network. A user owns a Thread network in the TCDS 126 if the user uploads the credentials for that Thread network to the TCDS 126 or the user is granted access by the home graph 128 for that Thread network and the ownership of the Thread network is lost after the user deletes the credentials for that Thread network. A device has access to the default Thread network of the home structure to which the device is linked.

The Thread standard defines an Extended PAN ID (Personal Area Network Identifier) as the network identifier for a Thread network. However, Thread networks of different channels, network keys, and PAN IDs may share the same Extended PAN ID worldwide, so the Extended PAN ID cannot be used as a unique identifier inside the cloud service 112 for authorization. Instead, the TCDS 126 generates a Universally Unique Identifier (UUID) (e.g., a 128-bit UUID) for each Thread network which is used to identify a Thread network for authorization purposes.

If a first-party or third-party client is not able to provide the Thread network UUID when retrieving Thread credentials from the TCDS 126, the client can provide an Extended PAN ID or other obtainable information instead. For example, the Extended PAN ID can be used for querying the TCDS 126 for network credentials, but only the UUID is used by the TCDS 126 to reference a Thread network in the home graph 128. When requesting Thread network credentials, the TCDS 126 returns the newest matched network credentials to which the client has access. For example, clients may provide a null parameter (for the default Thread network), an Extended PAN ID, an Extended PAN ID and an active-timestamp, or the UUID in the request to the TCDS 126.

Within the TCDS 126, a user may own one or more Thread networks, a Thread network may belong to one or more users, a device links to at most one Thread network, and a Thread network links to one or more devices. Within the home graph 128, a manager may own one or more home structures, a home structure may have one or more managers, and a home structure has at most one default Thread network.

### Commissioning Data and Control Transactions

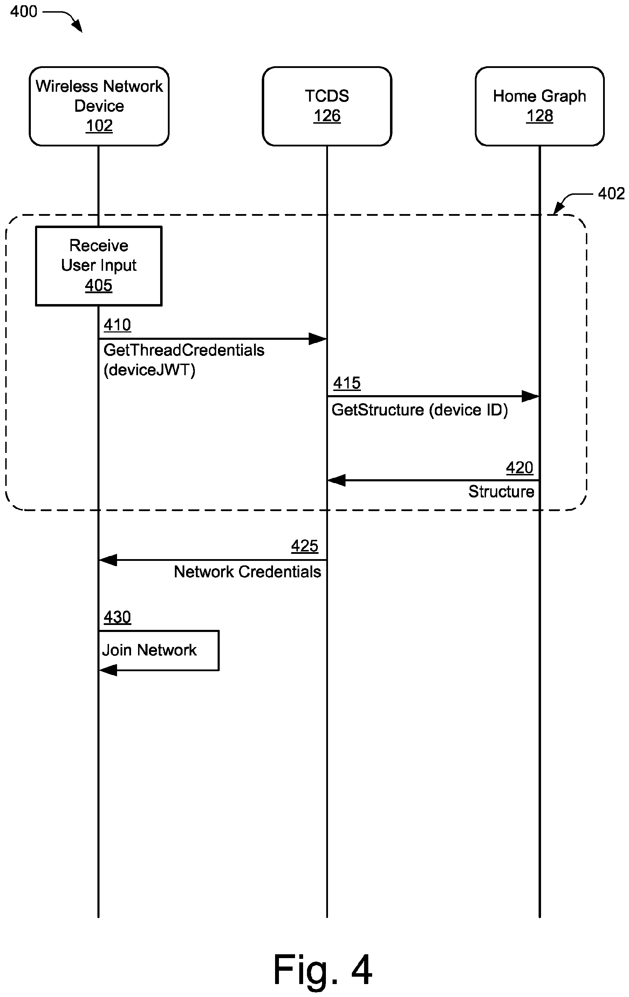

FIG. 4 illustrates data and control transactions between devices for commissioning a wireless network device in accordance with aspects of cloud-based Thread network commissioning. In this aspect, a wireless network device 102 is commissioned to join a Thread network that is a default Thread network for a structure.

At 405, the wireless network device 102 receives an input from a user to initiate the commissioning process. For example, a user may use an application on a smartphone to initiate commissioning, use a remote control of a network-enabled television or a media streaming device to initiate commissioning, use a reset switch on the wireless network device 102 to initiate commissioning, or the like.

At 410, the wireless network device 102 sends a message (e.g., a GetThreadCredentials message) to the TCDS 126 to request network credentials for the default Thread network. The message includes an identifier of the wireless network device 102 (e.g., deviceJWT (JavaScript Object Notation (JSON) Web Token (JWT)), a device JSON web token).

At 415, based on receiving the GetThreadCredentials message, the TCDS 126 sends a message (e.g., a GetStructure message) to the home graph 128 to obtain structure information from the home graph 128. The message includes the device identifier from the deviceJWT in 410. At 420, the home graph 128 sends the structure information related to the wireless network device 102 to the TCDS 126.

At 425, the TCDS 126 sends the network credentials for the default Thread network to the wireless network device 102. At 430, the wireless network device 102 uses the received network credentials to join the default Thread network.

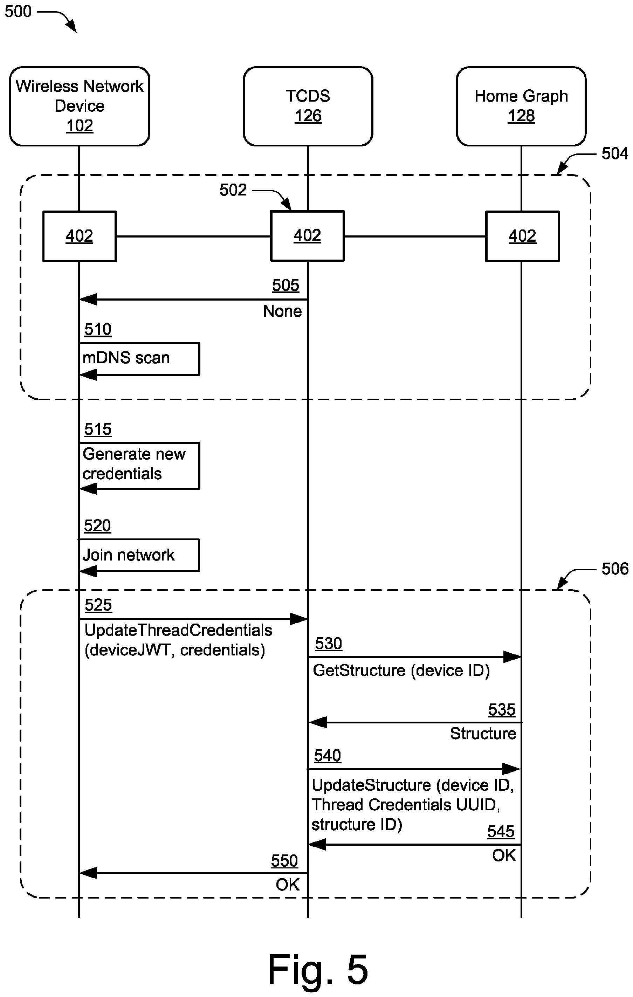

FIG. 5 illustrates data and control transactions between devices for commissioning a wireless network device in accordance with aspects of cloud-based Thread network commissioning. In this aspect, a wireless network device 102 is commissioned to join a Thread network that is not a default Thread network for a structure, and no other Thread networks are active within range of the wireless network device 102.

At 502, the set of signaling and control transactions included in sub-diagram 402 are performed to determine if there is a default Thread network. At 505, the TCDS 126 sends an indication to the wireless network device 102 that no default Thread network exists for the structure. At 510, the wireless network device performs an mDNS (multicast DNS, multicast Domain Name System) scan to determine if there are any active Thread networks within range of the wireless network device 102.

If no Thread networks are discovered, at 515, the wireless network device 102 generates network credentials for a new Thread network. At 520, the wireless network device 102 joins the newly-created Thread network using the generated network credentials.

At 525, the wireless network device 102 sends a message (e.g., an UpdateThreadCredentials message) to the TCDS 126 to update the network credentials for the default Thread network. The message includes an identifier of the wireless network device 102 (e.g., deviceJWT, device JSON web token) and the newly-generated network credentials. At 530, based on receiving the UpdateThreadCredentials message, the TCDS 126 sends a message (e.g., a GetStructure message) to the home graph 128 to obtain structure information from the home graph 128. At 535, the home graph 128 sends the structure information to the TCDS 126.

At 540, the TCDS 126 sends a message (e.g., an UpdateStructure message) to the home graph 128 that includes a device identifier, Thread credentials UUID, and the structure identifier (ID). At 545, after updating the structure information stored in the home graph 128, the home graph 128 sends an OK message to the TCDS to indicate that the home graph 128 has successfully updated the structure information. At 550, after receiving the OK message from the home graph 128, the TCDS 126 sends an OK message to the wireless network device 102 to indicate that the home graph 128 has successfully updated the structure information.

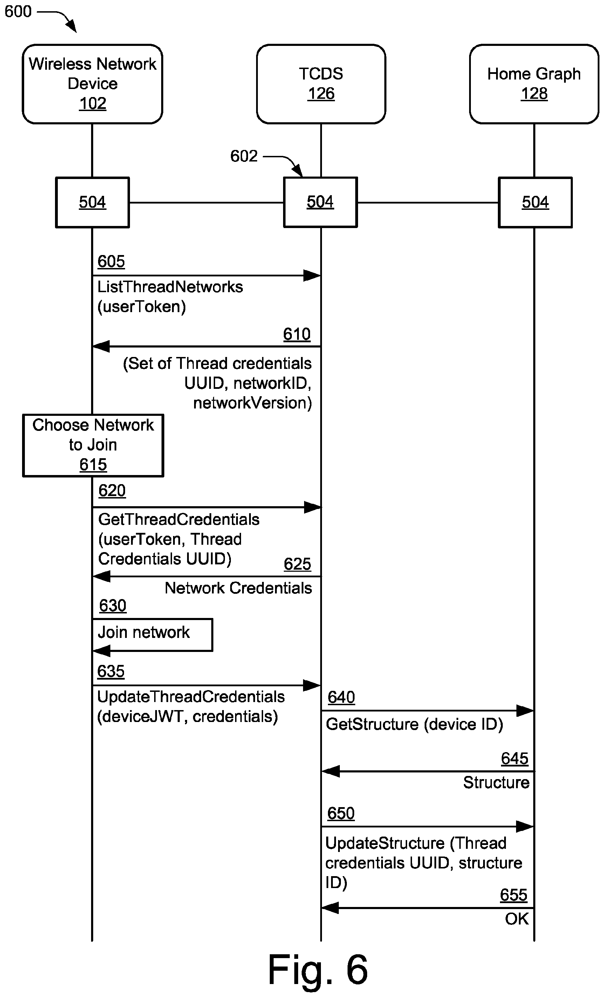

FIG. 6 illustrates data and control transactions between devices for commissioning a wireless network device in accordance with aspects of cloud-based Thread network commissioning. In this aspect, a wireless network device 102 is commissioned to join a Thread network that is not a default Thread network for a structure, and there are other Thread networks that are active within range of the wireless network device 102.

At 602, the set of signaling and control transactions included in sub-diagram 504 are performed to determine if there is a default Thread network. At 605, after performing the mDNS scan and finding that there are Thread networks within range of the wireless network device 102, the wireless network device 102 sends a message (e.g., a ListThreadNetworks message) that includes a user token to identify the user account to which the structure is associated. At 610, in response to receiving the ListThreadNetworks message, the TCDS 126 returns a set of Thread credentials UUID for the wireless device 102, a network identifier for the Thread network to join, and a network version. At 615, the wireless network device 102 chooses the Thread network to join.

At 620, the wireless network device 102 sends a message (e.g., the GetThreadCredentials message) that includes the user token and the Thread credentials UUID to the TCDS 126 to request network credentials for the Thread network. At 625, the TCDS 126 sends the network credentials for the Thread network to the wireless network device 102. At 630, the wireless network device 102 uses the received network credentials to join the Thread network.

At 635, the wireless network device 102 sends a message (e.g., the UpdateThreadCredentials message) to the TCDS 126 to update the network credentials for the default Thread network for the wireless network device 102. The message includes an identifier of the wireless network device 102 (e.g., deviceJWT, device JSON web token) and the network credentials. At 640, based on receiving the UpdateThreadCredentials message, the TCDS 126 sends a message (e.g., a GetStructure message) to the home graph 128 to obtain structure information from the home graph 128. At 645, the home graph 128 sends the structure information to the TCDS 126.

At 650, the TCDS 126 sends a message (e.g., an UpdateStructure message) to the home graph 128 that includes Thread credentials UUID and the structure identifier (ID). At 655, after updating the structure information stored in the home graph 128, the home graph 128 sends an OK message to the TCDS 126 to indicate that the home graph 128 has successfully updated the structure information.

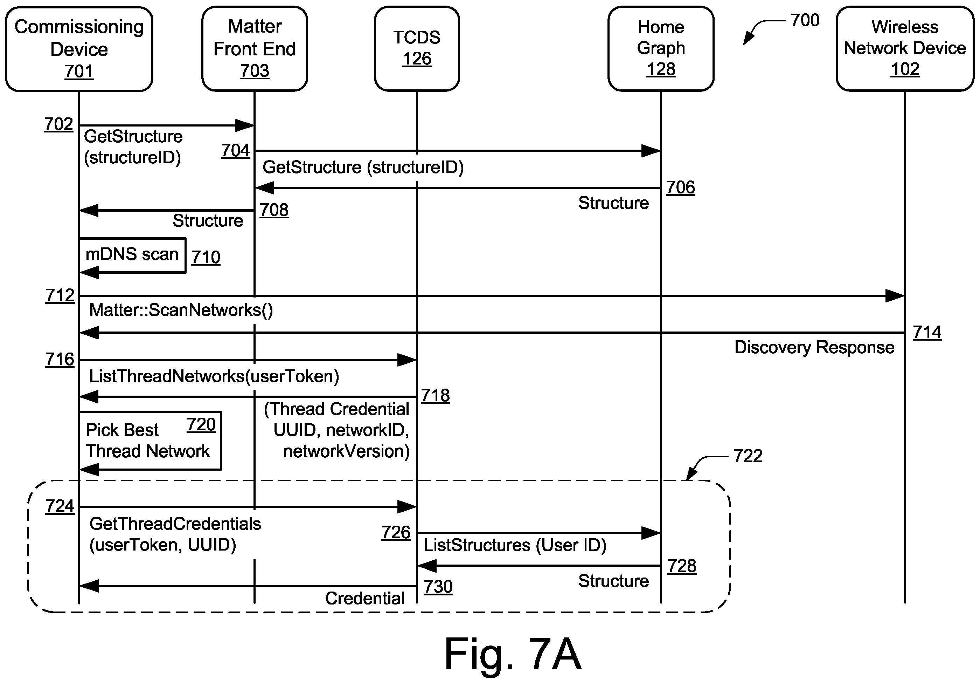

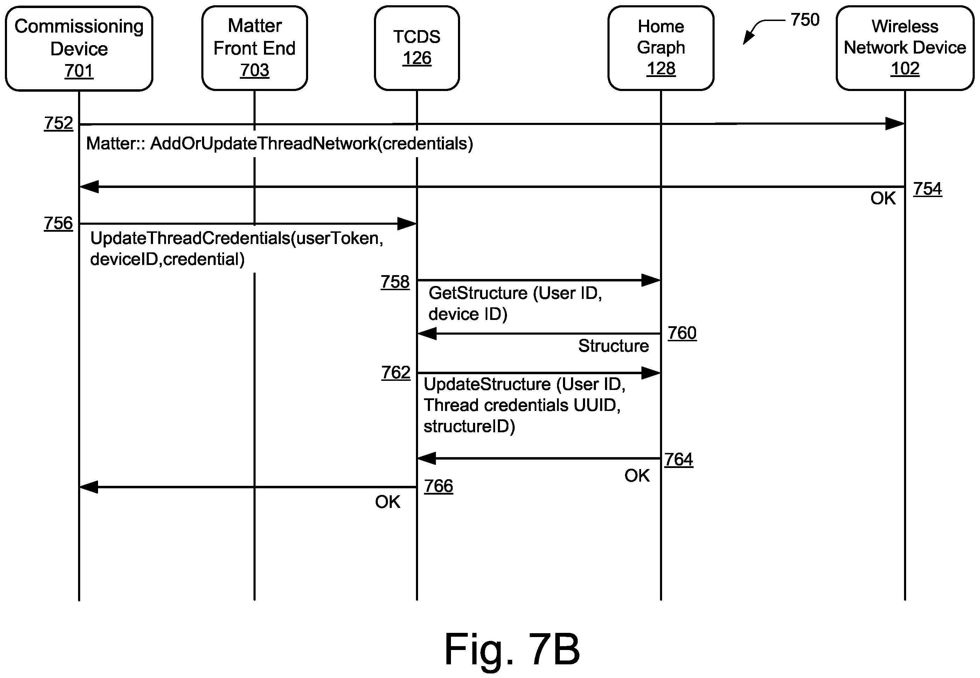

FIGs. 7a and 7b illustrate data and control transactions between devices for commissioning a wireless network device in accordance with aspects of cloud-based Thread network commissioning. In this aspect, a wireless network device 102 is commissioned to join a Matter network of a structure. The aim of Thread network commissioning for a Matter device is to join the device to a Thread network so that the device can be commissioned and controlled on the Matter network at a later time. Therefore, the Matter device need not be commissioned to the default Thread network of the target home structure. When selecting a Thread network for Matter commissioning, the factors to consider are (in priority order):
1. Can the credentials for the Thread network be retrieved from either the TCDS 126 or are the credentials stored in the commissioning device 701?
2. Is there at least one active border router on the Thread network?
3. Is the target device (wireless network device 102) reachable over the Thread network?
4. Is Thread network preferred by the commissioning device 701?
5. Is the Thread network the default network of the target home structure?

FIG. 7a illustrates obtaining Thread network credentials for the commissioning of the wireless network device 102. At 702, a user uses the commissioning device 701 (a Matter commissioning device) to commission the wireless network device 102 by sending a message (e.g., a GetStructure message) to a Matter Front End 703 (Matter Front End service 703). The Matter Front End 703 is a service included in the cloud service 112 to facilitate commissioning Matter devices using the home graph 128 to obtain structure information from the home graph 128. The GetStructure message includes a structure identifier (structure ID) for the structure to which the wireless network device will be commissioned.

At 704, the Matter Front End service 703 sends a message (e.g., a GetStructure message) to the home graph 128 to obtain structure information from the home graph 128. At 706, the home graph 128 sends the structure information to the Matter Front End service 703. At 708, the Matter Front End 703 sends the structure information to the commissioning device 701.

At 710, the commissioning device 701 performs an mDNS scan to scan for active Thread border routers. At 712, the commissioning device 710 sends a Matter::ScanNetworks command to the wireless network device to determine which Thread networks are reachable by the wireless network device 102. At 714, the wireless network device sends a discovery response to the commissioning device 701 that indicates which Thread network(s) are reachable by the wireless network device 102.

At 716, after finding that there are Thread networks within range of the wireless network device 102, the commissioning device 701 sends a message (e.g., a ListThreadNetworks message) to the TCDS 126 that includes a user token to identify the user account to which the structure is associated. At 718, in response to receiving the ListThreadNetworks message, the TCDS 126 returns a set of Thread credentials UUIDs, network identifiers for the discovered Thread networks, and respective network versions. At 720, if multiple Thread networks are found, the commissioning device selects the best Thread network based on the priority ordering of: is the Thread network known, is the Thread network active, is the Thread network reachable, is the Thread network preferred, and is the Thread network the default Thread network.

The operations in the sub-diagram 722 are performed if the commissioning device 701 does not have a copy of the credentials for the selected Thread network. At 724, the commissioning device 701 sends a message (e.g., a GetThreadCredentials message) to the TCDS 126 to request network credentials for the default Thread network. The message includes the user token and the identifier (e.g., UUID) of the wireless network device 102. At 726, based on receiving the GetThreadCredentials message, the TCDS 126 sends a message (e.g., a ListStructures message) that includes a user identifier to the home graph 128 to obtain structure information from the home graph 128. At 728, the home graph 128 sends the structure information to the TCDS 126. At 730, the TCDS 126 checks if the requested UUID from 724 matches the structure information and sends the network credentials for the selected Thread network to the commissioning device 701.

FIG. 7b illustrates applying the Thread network credentials to the wireless network device 102 that were obtained by the commissioning device 701 in FIG. 7a. At 752, the commissioning device 701 sends a message (e.g., a Matter::AddOrUpdateThreadNetwork message) to the wireless network device that includes the network credentials for the Thread network to which the wireless device 102 will be commissioned. At 754, the wireless network device 102 sends an OK message to the commissioning device 701 to indicate that the wireless network device 102 added or updated its Thread network credential.

At 756, the commissioning device 701 sends a message (e.g., an UpdateThreadCredentials message) to the TCDS 126 to update the network credentials for the Thread network. The message includes the user token, an identifier of the wireless network device 102, and the network credentials. At 758, based on receiving the UpdateThreadCredentials message, the TCDS 126 sends a message (e.g., a GetStructure message) that includes the user ID and device ID to the home graph 128 to obtain structure information from the home graph 128. At 760, the home graph 128 sends the structure information to the TCDS 126.

At 762, the TCDS 126 sends a message (e.g., an UpdateStructure message) to the home graph 128 that includes the user ID, Thread credentials UUID, and the structure identifier (ID). At 764, after updating the structure information stored in the home graph 128, the home graph 128 sends an OK message to the TCDS 126 to indicate that the home graph 128 has successfully updated the structure information. At 766, after receiving the OK message from the home graph 128, the TCDS 126 sends an OK message to the commissioning device 701 to indicate that the home graph 128 has successfully updated the structure information.

### Network Migration

Thread network devices can migrate from one mesh partition to another by changing the network credentials used by the Thread device to join a network from credentials of the old network to credentials of the new network. The migration from one network to another can be either a passive migration or an active migration.

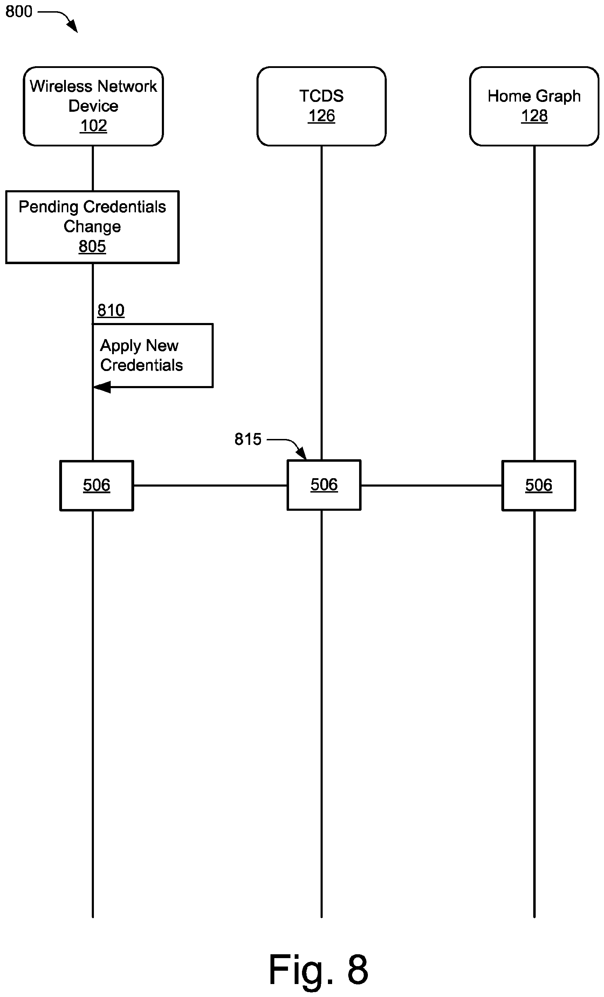

FIG. 8 illustrates data and control transactions between devices for passive migration of a wireless network device in accordance with aspects of cloud-based Thread network commissioning. In this aspect, a wireless network device 102 is migrated to a new Thread network by changing the network credentials the wireless network device 102 uses to operate on a Thread network partition.

At 805, there is a pending credential change. For example, the wireless network device has received a new set of network credentials. At 810, the wireless device 102 applies the new credentials to operate on a new (migrated) Thread network partition. At 815, the set of signaling and control transactions included in sub-diagram 506 are performed to upload the Thread network credentials and update the default Thread network stored in the home graph 128 of the structure associated with the wireless network device 102.

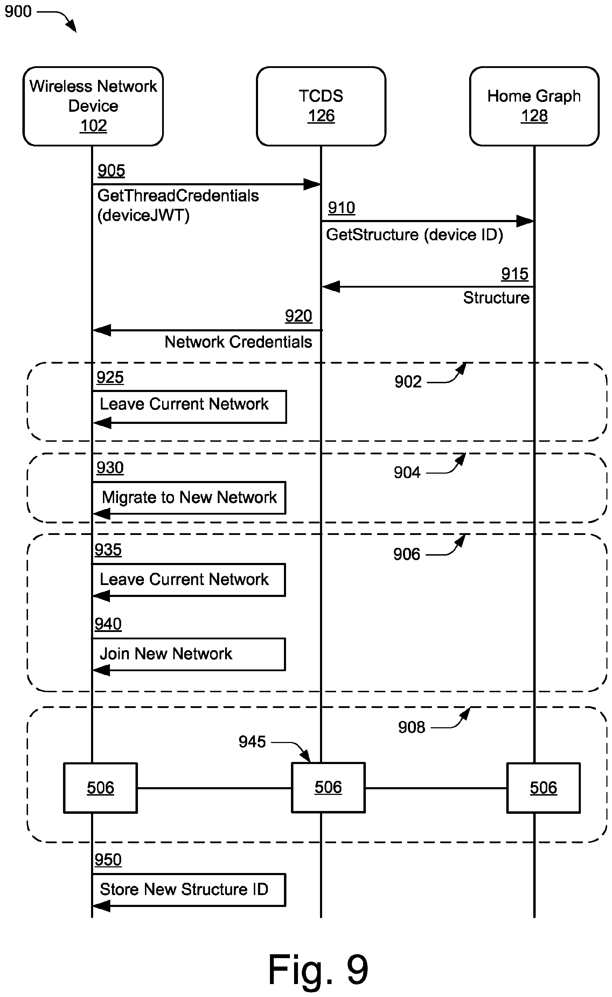

FIG. 9 illustrates data and control transactions between devices for active migration of a wireless network device in accordance with aspects of cloud-based Thread network commissioning. In this aspect, a wireless network device 102 is migrated to a new Thread network by changing the network credentials the wireless network device 102 uses to operate on a Thread network partition.

At 905, the wireless network device 102 sends a message (e.g., a GetThreadCredentials message) to the TCDS 126 to request network credentials for the default Thread network. The message includes an identifier of the wireless network device 102 (e.g., deviceJWT, device JSON web token).

At 910, based on receiving the GetThreadCredentials message, the TCDS 126 sends a message (e.g., a GetStructure message) that includes the device ID to the home graph 128 to obtain structure information from the home graph 128. At 915, the home graph 128 sends the structure information to the TCDS 126. At 920, the TCDS 126 sends the network credentials for the default Thread network to the wireless network device 102.

There are four alternative aspects for the wireless network device 102 to actively change its Thread network. In the first aspect, when the wireless network device 102 is removed from a home structure, the wireless network device 102 erases its current credentials to leave the Thread network it previously joined. Sub-diagram 902 illustrates this first alternative aspect in which the wireless device 102 is not associated with a structure and leaves the current Thread network by deleting its network credentials at 925.

In the second aspect, when the default Thread network for the wireless network device 102 changes, the wireless network device 102 migrates to the new default Thread network. Sub-diagram 904 illustrates this second alternative aspect in which the wireless device 102 migrates to a new Thread network at 930 and stores a new structure ID at 950.

In the third aspect, when a default Thread network exists in a new structure, the wireless network device 102 migrates by leaving its current network and joining the new default Thread network. Sub-diagram 906 illustrates this third alternative aspect in which the wireless device 102 migrates by leaving the current Thread network at 935 and joining the new default Thread network at 940.

In the fourth aspect, when there is no default Thread network in a new structure, the wireless network device 102 migrates by using the commissioning process when there is no default Thread network in the new structure. Sub-diagram 908 illustrates this fourth alternative aspect in which the set of signaling and control transactions included in sub-diagram 506 are performed to upload the Thread network credentials and update the default Thread network stored in the home graph 128 of the structure associated with the wireless network device 102 in order to migrate the wireless device 102 to the new default Thread network.

### Example Methods

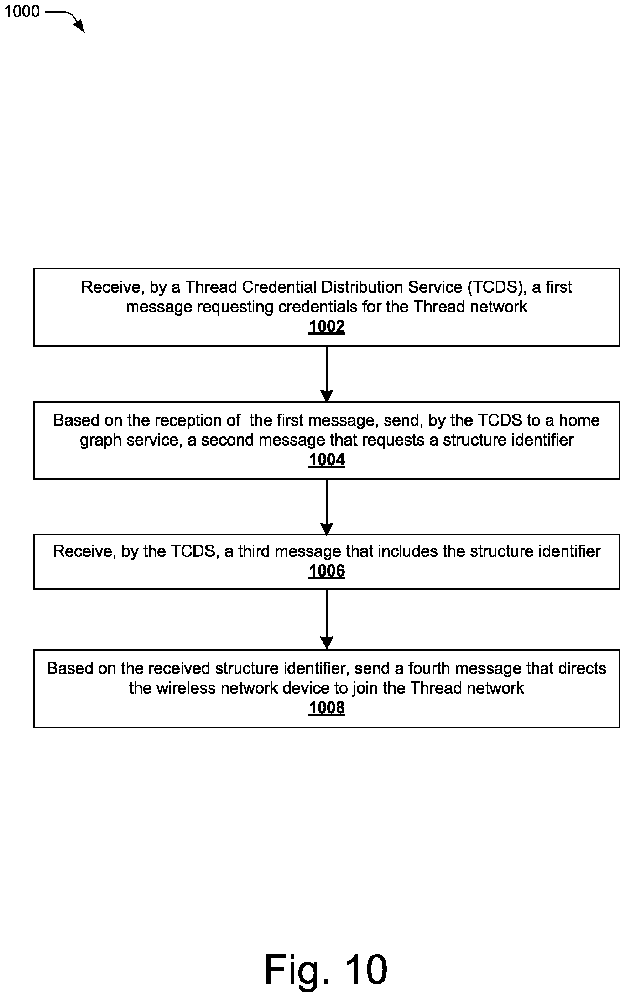

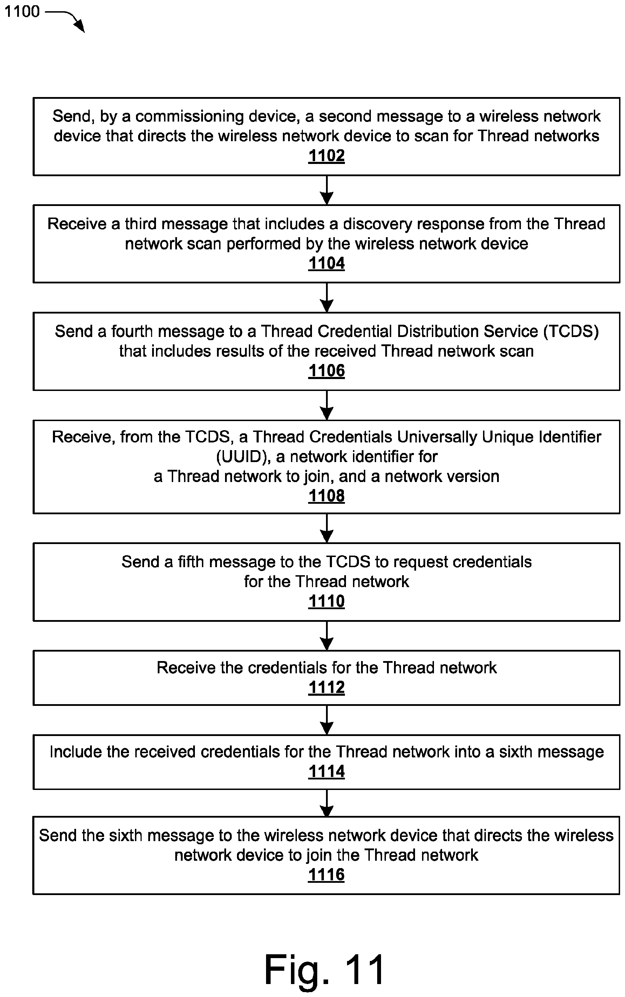

Example methods 1000 and 1100 are described with reference to FIGs. 10 and 11 in accordance with one or more aspects of cloud-based Thread network commissioning. Generally, any of the components, modules, methods, and operations described herein can be implemented using software, firmware, hardware (e.g., fixed logic circuitry), manual processing, or any combination thereof. Some operations of the example methods may be described in the general context of executable instructions stored on computer-readable storage memory that is local and/or remote to a computer processing system, and implementations can include software applications, programs, functions, and the like. Alternatively or in addition, any of the functionality described herein can be performed, at least in part, by one or more hardware logic components, such as, and without limitation, Field-programmable Gate Arrays (FPGAs), Application-specific Integrated Circuits (ASICs), Application-specific Standard Products (ASSPs), System-on-a-chip systems (SoCs), Complex Programmable Logic Devices (CPLDs), and the like. The order in which the method blocks are described is not intended to be construed as a limitation, and any number of the described method blocks can be combined in any order or skipped to implement a method or an alternate method.

FIG. 10 illustrates example method(s) 1000 of cloud-based Thread network commissioning as generally related to joining a wireless network device to a Thread network based on network credentials provided by a cloud-base service. At block 1002, a Thread Credential Distribution Service (TCDS) receives a first message requesting credentials for a Thread network. For example, a TCDS (e.g., the TCDS 126) receives a first message (e.g., a GetThreadCredentials message) requesting credentials for a Thread network (e.g., the wireless mesh network 202) from a wireless network device (e.g., the wireless network device 102).

At 1004, based on the receiving the first message, the TCDS sends a second message that requests a structure identifier to a home graph service. For example, the TCDS 126 sends a second message (e.g., a GetStructure message) that requests a structure identifier to a home graph service (e.g., the home graph 128).

At 1006, the TCDS receives a third message that includes the structure identifier. For example, the TCDS 126 receives a third message (e.g., a Structure message) from the home graph 128.

At 1008, based on the received structure identifier, the TCDS sends a fourth message that directs the wireless network device to join the Thread network. For example, based on the received structure identifier, the TCDS 126 sends a fourth message that includes network credentials for the Thread network that directs the wireless network device 102 to join the Thread network.

FIG. 11 illustrates example method(s) 1100 of cloud-based Thread network commissioning as generally related to joining a wireless network device to a Matter network based on network credentials provided by a cloud-base service. At block 1102, a commissioning device sends a second message to a wireless network device that directs the wireless network device to scan for Thread networks. For example, a commissioning device (e.g., the commissioning device 701) sends a second message (e.g., a Matter::ScanNetworks message) to a wireless network device (e.g., the wireless network device 102) that directs the wireless network device 102 to scan for Thread networks.

At 1104, the commissioning device receives a third message that includes a discovery response from the Thread network scan performed by the wireless network device. For example, the commissioning device 701 receives a third message (e.g., a Discovery Response message) that includes a discovery response from the Thread network scan performed by the wireless network device 102.

At 1106, the commissioning device sends a fourth message to a Thread Credential Distribution Service (TCDS) that includes results of the received Thread network scan. For example, the commissioning device 701 sends a fourth message (e.g., a ListThreadNetworks message) to a Thread Credential Distribution Service (e.g., the TCDS 126) that includes results of the received Thread network scan.

At 1108, the commissioning device receives, from the TCDS, a Thread credentials Universally Unique Identifier (UUID), a network identifier for a Thread network to join, and a network version. For example, the commissioning device 701 receives, from the TCDS 126, a Universally Unique Identifier (UUID) for the wireless network device 102, a network identifier for a Thread network to join, and a network version.

At 1110, the commissioning device sends a fifth message to the TCDS to request credentials for the Thread network. For example, the commissioning device 701 sends a fifth message (e.g., a GetThreadCredentials message) to the TCDS 126 to request credentials for the Thread network.

At 1112, the commissioning device receives the credentials for the Thread network. For example, the commissioning device 701 receives the credentials for the Thread network.

At 1114, the commissioning device includes the received credentials for the Thread network into a sixth message. For example, the commissioning device 701 includes the received credentials for the Thread network into a sixth message (e.g., a Matter::AddOrUpdateThreadNetwork message).

At 1116, the commissioning device sends the sixth message to the wireless network device that directs the wireless network device to join the Thread network. For example, the commissioning device 701 sends the sixth message to the wireless network device 102 that directs the wireless network device 102 to join the Thread network.

### Example Environments and Devices

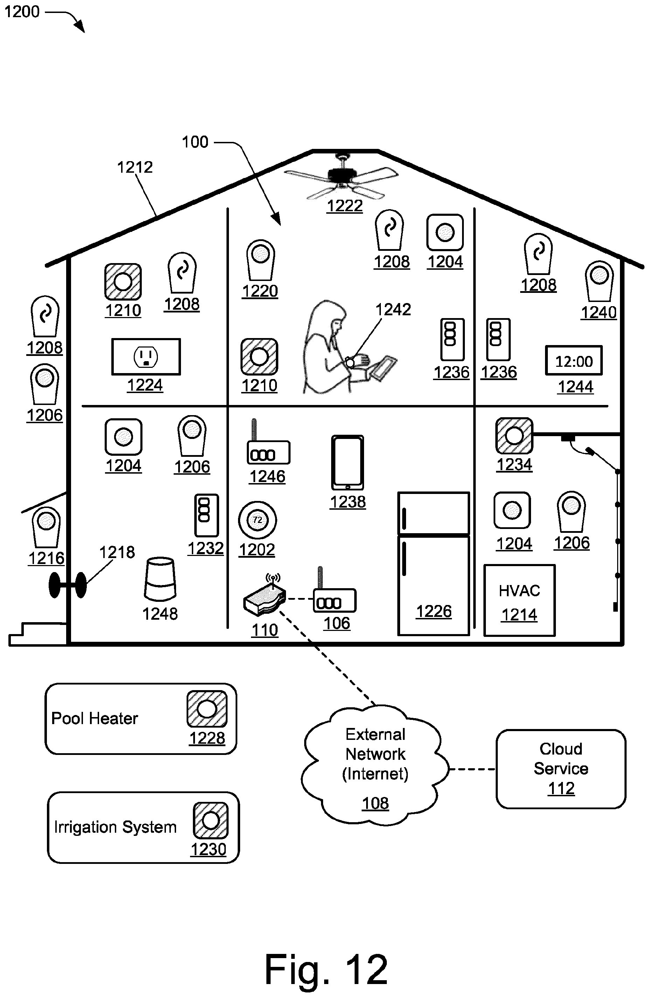

FIG. 12 illustrates an example environment 1200 in which aspects of cloud-based Thread network commissioning can be implemented. Generally, the environment 1200 includes the home area network (HAN) 200 implemented as part of a home or other type of structure with any number of wireless network devices that are configured for communication in a wireless network. For example, the wireless network devices can include a thermostat 1202, hazard detectors 1204 (e.g., for smoke and/or carbon monoxide), cameras 1206 (e.g., indoor and outdoor), lighting units 1208 (e.g., indoor and outdoor), and any other types of wireless network devices 1210 that are implemented inside and/or outside of a structure 1212 (e.g., in a home environment), such as a network-enabled television or media streaming device. In this example, the wireless network devices can also include any of the previously described devices, such as a border router 106, as well as any of the devices implemented as a router device 206, and/or as an end device 208.

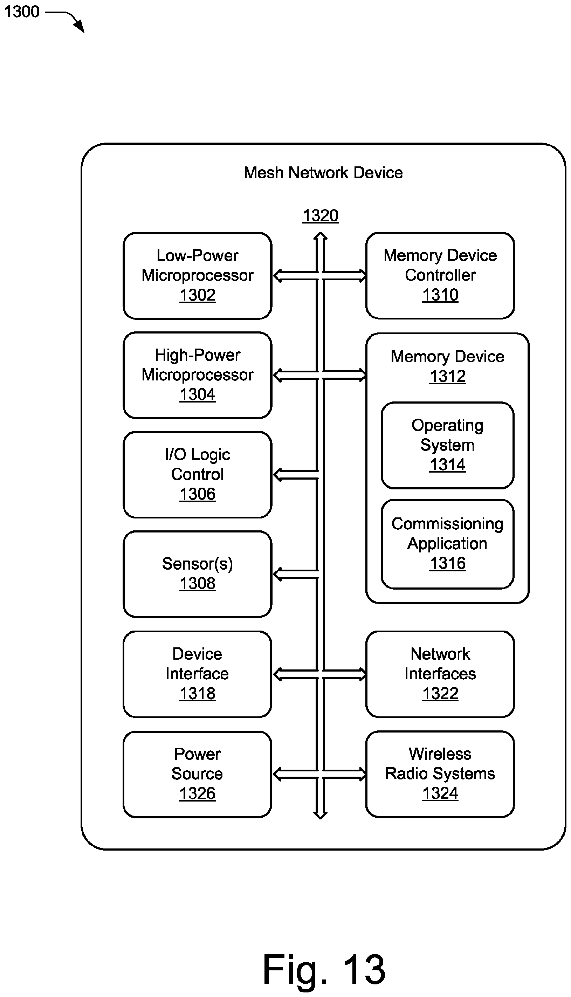

In the environment 1200, any number of the wireless network devices can be implemented for wireless interconnection to wirelessly communicate and interact with each other. The wireless network devices are modular, intelligent, multi-sensing, network-connected devices that can integrate seamlessly with each other and/or with a central server or a cloud-computing system to provide any of a variety of useful automation objectives and implementations. An example of a wireless network device that can be implemented as any of the devices described herein is shown and described with reference to FIG. 13.

In implementations, the thermostat 1202 may include a Nest^{®} Learning Thermostat that detects ambient climate characteristics (e.g., temperature and/or humidity) and controls a HVAC system 1214 in the home environment. The learning thermostat 1202 and other network-connected devices "learn" by capturing occupant settings to the devices. For example, the thermostat learns preferred temperature set-points for mornings and evenings, and when the occupants of the structure are asleep or awake, as well as when the occupants are typically away or at home.

A hazard detector 1204 can be implemented to detect the presence of a hazardous substance or a substance indicative of a hazardous substance (e.g., smoke, fire, or carbon monoxide). In examples of wireless interconnection, a hazard detector 1204 may detect the presence of smoke, indicating a fire in the structure, in which case the hazard detector that first detects the smoke can broadcast a low-power wake-up signal to all of the connected wireless network devices. The other hazard detectors 1204 can then receive the broadcast wake-up signal and initiate a high-power state for hazard detection and to receive wireless communications of alert messages. Further, the lighting units 1208 can receive the broadcast wake-up signal and activate in the region of the detected hazard to illuminate and identify the problem area. In another example, the lighting units 1208 may activate in one illumination color to indicate a problem area or region in the structure, such as for a detected fire or break-in, and activate in a different illumination color to indicate safe regions and/or escape routes out of the structure.

In various configurations, the wireless network devices 1210 can include an entryway interface device 1216 that functions in coordination with a network-connected door lock system 1218, and that detects and responds to a person's approach to or departure from a location, such as an outer door of the structure 1212. The entryway interface device 1216 can interact with the other wireless network devices based on whether someone has approached or entered the smart-home environment. An entryway interface device 1216 can control doorbell functionality, announce the approach or departure of a person via audio or visual means, and control settings on a security system, such as to activate or deactivate the security system when occupants come and go. The wireless network devices 1210 can also include other sensors and detectors, such as to detect ambient lighting conditions, detect room-occupancy states (e.g., with an occupancy sensor 1220), and control a power and/or dim state of one or more lights. In some instances, the sensors and/or detectors may also control a power state or speed of a fan, such as a ceiling fan 1222. Further, the sensors and/or detectors may detect occupancy in a room or enclosure and control the supply of power to electrical outlets or devices 1224, such as if a room or the structure is unoccupied.

The wireless network devices 1210 may also include connected appliances and/or controlled systems 1226, such as refrigerators, stoves and ovens, washers, dryers, air conditioners, pool heaters 1228, irrigation systems 1230, security systems 1232, and so forth, as well as other electronic and computing devices, such as televisions, media streaming devices, entertainment systems, computers, intercom systems, garage-door openers 1234, ceiling fans 1222, control panels 1236, and the like. When plugged in, an appliance, device, or system can announce itself to the home area network as described above and can be automatically integrated with the controls and devices of the home area network, such as in the home. It should be noted that the wireless network devices 1210 may include devices physically located outside of the structure, but within wireless communication range, such as a device controlling a swimming pool heater 1228 or an irrigation system 1230.

As described above, the HAN 200 includes a border router 106 that interfaces for communication with an external network, outside the HAN 200. The border router 106 connects to an access point 110, which connects to the access network 108, such as the Internet. A cloud service 112, which is connected via the access network 108, provides services related to and/or using the devices within the HAN 200. By way of example, the cloud service 112 can include applications for connecting end user devices 1238, such as smartphones, tablets, and the like, to devices in the home area network, processing and presenting data acquired in the HAN 200 to end users, linking devices in one or more HANs 200 to user accounts of the cloud service 112, provisioning and updating devices in the HAN 200, and so forth. For example, a user can control the thermostat 1202 and other wireless network devices in the home environment using a network-connected computer or portable device, such as a mobile phone or tablet device. Further, the wireless network devices can communicate information to any central server or cloud-computing system via the border router 106 and the access point 110. The data communications can be carried out using any of a variety of custom or standard wireless protocols (e.g., Wi-Fi, ZigBee for low power, 6LoWPAN, Thread, etc.) and/or by using any of a variety of custom or standard wired protocols (CAT6 Ethernet, HomePlug, etc.).

Any of the wireless network devices in the HAN 200 can serve as low-power and communication nodes to create the HAN 200 in the home environment. Individual low-power nodes of the network can regularly send out messages regarding what they are sensing, and the other low-powered nodes in the environment - in addition to sending out their own messages - can repeat the messages, thereby communicating the messages from node to node (*i.e.,* from device to device) throughout the home area network. The wireless network devices can be implemented to conserve power, particularly when battery-powered, utilizing low-powered communication protocols to receive the messages, translate the messages to other communication protocols, and send the translated messages to other nodes and/or to a central server or cloud-computing system. For example, an occupancy and/or ambient light sensor can detect an occupant in a room as well as measure the ambient light, and activate the light source when the ambient light sensor 1240 detects that the room is dark and when the occupancy sensor 1220 detects that someone is in the room. Further, the sensor can include a low-power wireless communication chip (e.g., an IEEE 802.15.4 chip, a Thread chip, a ZigBee chip) that regularly sends out messages regarding the occupancy of the room and the amount of light in the room, including instantaneous messages coincident with the occupancy sensor detecting the presence of a person in the room. As mentioned above, these messages may be sent wirelessly, using the home area network, from node to node (e.g., network-connected device to network-connected device) within the home environment as well as over the Internet to a central server or cloud-computing system.

In other configurations, various ones of the wireless network devices can function as "tripwires" for an alarm system in the home environment. For example, in the event a perpetrator circumvents detection by alarm sensors located at windows, doors, and other entry points of the structure or environment, the alarm could still be triggered by receiving an occupancy, motion, heat, sound, etc. message from one or more of the low-powered mesh nodes in the home area network. In other implementations, the home area network can be used to automatically turn on and off the lighting units 1208 as a person transitions from room to room in the structure. For example, the wireless network devices can detect the person's movement through the structure and communicate corresponding messages via the nodes of the home area network. Using the messages that indicate which rooms are occupied, other wireless network devices that receive the messages can activate and/or deactivate accordingly. As referred to above, the home area network can also be utilized to provide exit lighting in the event of an emergency, such as by turning on the appropriate lighting units 1208 that lead to a safe exit. The light units 1208 may also be turned-on to indicate the direction along an exit route that a person should travel to safely exit the structure.

The various wireless network devices may also be implemented to integrate and communicate with wearable computing devices 1242, such as may be used to identify and locate an occupant of the structure, and adjust the temperature, lighting, sound system, and the like accordingly. In other implementations, RFID sensing (e.g., a person having an RFID bracelet, necklace, or key fob), synthetic vision techniques (e.g., video cameras and face recognition processors), audio techniques (e.g., voice, sound pattern, vibration pattern recognition), ultrasound sensing/imaging techniques, and infrared or near-field communication (NFC) techniques (e.g., a person wearing an infrared or NFC-capable smartphone), along with rules-based inference engines or artificial intelligence techniques that draw useful conclusions from the sensed information as to the location of an occupant in the structure or environment.

In other implementations, personal comfort-area networks, personal health-area networks, personal safety-area networks, and/or other such human-facing functionalities of service robots can be enhanced by logical integration with other wireless network devices and sensors in the environment according to rules-based inferencing techniques or artificial intelligence techniques for achieving better performance of these functionalities. In an example relating to a personal health-area, the system can detect whether a household pet is moving toward the current location of an occupant (e.g., using any of the wireless network devices and sensors), along with rules-based inferencing and artificial intelligence techniques. Similarly, a hazard detector service robot can be notified that the temperature and humidity levels are rising in a kitchen, and temporarily raise a hazard detection threshold, such as a smoke detection threshold, under an inference that any small increases in ambient smoke levels will most likely be due to cooking activity and not due to a genuinely hazardous condition. Any service robot that is configured for any type of monitoring, detecting, and/or servicing can be implemented as a mesh node device on the home area network, conforming to the wireless interconnection protocols for communicating on the home area network.

The wireless network devices 1210 may also include a network-connected alarm clock 1244 for each of the individual occupants of the structure in the home environment. For example, an occupant can customize and set an alarm device for a wake time, such as for the next day or week. Artificial intelligence can be used to consider occupant responses to the alarms when they go off and make inferences about preferred sleep patterns over time. An individual occupant can then be tracked in the home area network based on a unique signature of the person, which is determined based on data obtained from sensors located in the wireless network devices, such as sensors that include ultrasonic sensors, passive IR sensors, and the like. The unique signature of an occupant can be based on a combination of patterns of movement, voice, height, size, etc., as well as using facial recognition techniques.

In an example of wireless interconnection, the wake time for an individual can be associated with the thermostat 1202 to control the HVAC system in an efficient manner so as to pre-heat or cool the structure to desired sleeping and awake temperature settings. The preferred settings can be learned over time, such as by capturing the temperatures set in the thermostat before the person goes to sleep and upon waking up. Collected data may also include biometric indications of a person, such as breathing patterns, heart rate, movement, etc., from which inferences are made based on this data in combination with data that indicates when the person actually wakes up. Other wireless network devices can use the data to provide other automation objectives, such as adjusting the thermostat 1202 so as to pre-heat or cool the environment to a desired setting and turning-on or turning-off the lights 1208.

In implementations, the wireless network devices can also be utilized for sound, vibration, and/or motion sensing such as to detect running water and determine inferences about water usage in a home environment based on algorithms and mapping of the water usage and consumption. This can be used to determine a signature or fingerprint of each water source in the home and is also referred to as "audio fingerprinting water usage." Similarly, the wireless network devices can be utilized to detect the subtle sound, vibration, and/or motion of unwanted pests, such as mice and other rodents, as well as by termites, cockroaches, and other insects. The system can then notify an occupant of the suspected pests in the environment, such as with warning messages to help facilitate early detection and prevention.

The environment 1200 may include one or more wireless network devices that function as a hub 1246. The hub 1246 may be a general-purpose home automation hub, or an application-specific hub, such as a security hub, an energy management hub, an HVAC hub, and so forth. The functionality of a hub 1246 may also be integrated into any wireless network device, such as a network-connected thermostat device or the border router 106. Hosting functionality on the hub 1246 in the structure 1212 can improve reliability when the user's internet connection is unreliable, can reduce latency of operations that would normally have to connect to the cloud service 112, and can satisfy system and regulatory constraints around local access between wireless network devices.

Additionally, the example environment 1200 includes a network-connected speaker (network-connected assistant device) 1248. The network-connected speaker 1248 provides voice assistant services that include providing voice control of network-connected devices. The functions of the hub 1246 may be hosted in the network-connected speaker 1248. The network-connected speaker 1248 can be configured to communicate via the wireless mesh network 202, the Wi-Fi network 204, or both.

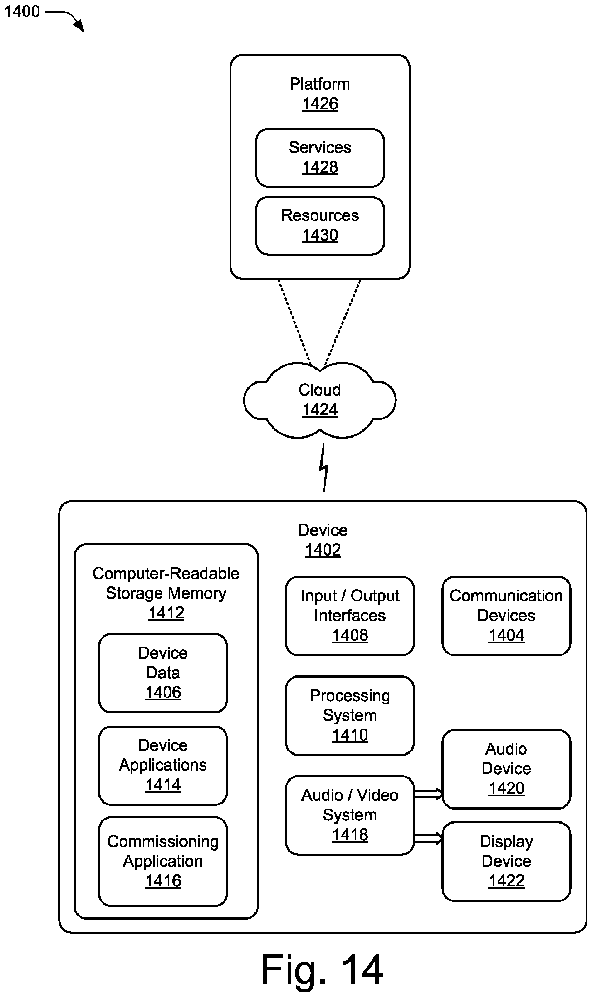

FIG. 13 illustrates an example wireless network device 1300 that can be implemented as any of the wireless network devices (nodes) in a home area network (Thread network, fabric network, Weave network, Matter network) in accordance with one or more aspects of cloud-based Thread network commissioning as described herein. The device 1300 can be integrated with electronic circuitry, microprocessors, memory, input output (I/O) logic control, communication interfaces and components, as well as other hardware, firmware, and/or software to implement the device in a home area network. Further, the wireless network device 1300 can be implemented with various components, such as with any number and combination of different components as further described with reference to the example device shown in FIG. 14.

In this example, the wireless network device 1300 includes a low-power microprocessor 1302 and a high-power microprocessor 1304 (e.g., microcontrollers or digital signal processors) that process executable instructions. The device also includes an input-output (I/O) logic control 1306 (e.g., to include electronic circuitry). The microprocessors can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The low-power microprocessor 1302 and the high-power microprocessor 1304 can also support one or more different device functionalities of the device. For example, the high-power microprocessor 1304 may execute computationally intensive operations, whereas the low-power microprocessor 1302 may manage less-complex processes such as detecting a hazard or temperature from one or more sensors 1308. The low-power processor 1302 may also wake or initialize the high-power processor 1304 for computationally intensive processes.

The one or more sensors 1308 can be implemented to detect various properties such as acceleration, temperature, humidity, water, supplied power, proximity, external motion, device motion, sound signals, ultrasound signals, light signals, fire, smoke, carbon monoxide, global-positioning-satellite (GPS) signals, radio frequency (RF), other electromagnetic signals or fields, or the like. As such, the sensors 1308 may include any one or a combination of temperature sensors, humidity sensors, hazard-related sensors, other environmental sensors, accelerometers, microphones, optical sensors up to and including cameras (e.g., charged coupled-device or video cameras, active or passive radiation sensors, GPS receivers, and radio frequency identification detectors. In implementations, the wireless network device 1300 may include one or more primary sensors, as well as one or more secondary sensors, such as primary sensors that sense data central to the core operation of the device (e.g., sensing a temperature in a thermostat or sensing smoke in a smoke detector), while the secondary sensors may sense other types of data (e.g., motion, light or sound), which can be used for energy-efficiency objectives or automation objectives.

The wireless network device 1300 includes a memory device controller 1310 and a memory device 1312, such as any type of a nonvolatile memory and/or other suitable electronic data storage device. The wireless network device 1300 can also include various firmware and/or software, such as an operating system 1314 that is maintained as computer executable instructions by the memory and executed by a microprocessor. The device software may also include a commissioning application 1316 that implements aspects of cloud-based Thread network commissioning. The wireless network device 1300 also includes a device interface 1318 to interface with another device or peripheral component and includes an integrated data bus 1320 that couples the various components of the wireless network device for data communication between the components. The data bus in the wireless network device may also be implemented as any one or a combination of different bus structures and/or bus architectures.

The device interface 1318 may receive input from a user and/or provide information to the user (e.g., as a user interface), and a received input can be used to determine a setting. The device interface 1318 may also include mechanical or virtual components that respond to a user input. For example, the user can mechanically move a sliding or rotatable component, or the motion along a touchpad may be detected, and such motions may correspond to a setting adjustment of the device. Physical and virtual movable user-interface components can allow the user to set a setting along a portion of an apparent continuum. The device interface 1318 may also receive inputs from any number of peripherals, such as buttons, a keypad, a switch, a microphone, and an imager (e.g., a camera device).

The wireless network device 1300 can include network interfaces 1322, such as a home area network interface for communication with other wireless network devices in a home area network, wired network devices (e.g., Ethernet-connected devices), and an external network interface for network communication, such as via the Internet. The wireless network device 1300 also includes wireless radio systems 1324 for wireless communication with other wireless network devices via the home area network interface and for multiple, different wireless communications systems. The wireless radio systems 1324 may include Wi-Fi, Bluetooth^{™}, Mobile Broadband, BLE, and/or point-to-point IEEE 802.15.4. Each of the different radio systems can include a radio device, antenna, and chipset that is implemented for a particular wireless communications technology. The wireless network device 1300 also includes a power source 1326, such as a battery and/or to connect the device to line voltage. An AC power source may also be used to charge the battery of the device.

FIG. 14 illustrates an example system 1400 that includes an example device 1402, which can be implemented as any of the wireless network devices that implement aspects of cloud-based Thread network commissioning as described with reference to the previous FIGs. 1-13. The example device 1402 may be any type of computing device, client device, mobile phone, tablet, communication, entertainment, gaming, media playback, and/or other type of device. Further, the example device 1402 may be implemented as any other type of wireless network device that is configured for communication on a home area network, such as a thermostat, hazard detector, camera, light unit, commissioning device, router, border router, joiner router, joining device, end device, leader, access point, and/or other wireless network devices.

The device 1402 includes communication devices 1404 that enable wired and/or wireless communication of device data 1406, such as data that is communicated between the devices in a home area network, data that is being received, data scheduled for broadcast, data packets of the data, data that is synchronized between the devices, etc. The device data can include any type of communication data, as well as audio, video, and/or image data that is generated by applications executing on the device. The communication devices 1404 can also include transceivers for cellular phone communication and/or for network data communication.

The device 1402 also includes input/output (I/O) interfaces 1408, such as data network interfaces that provide connection and/or communication links between the device, data networks (e.g., a home area network, external network, etc.), and other devices. The I/O interfaces can be used to couple the device to any type of components, peripherals, and/or accessory devices. The I/O interfaces also include data input ports via which any type of data, media content, and/or inputs can be received, such as user inputs to the device, as well as any type of communication data, as well as audio, video, and/or image data received from any content and/or data source.

The device 1402 includes a processing system 1410 that may be implemented at least partially in hardware, such as with any type of microprocessors, controllers, and the like that process executable instructions. The processing system can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The device 1402 may further include any type of a system bus or other data and command transfer system that couples the various components within the device. A system bus can include any one or combination of different bus structures and architectures, as well as control and data lines.

The device 1402 also includes computer-readable storage memory 1412, such as data storage devices that can be accessed by a computing device, and that provide persistent storage of data and executable instructions (e.g., software applications, modules, programs, functions, and the like). The computer-readable storage memory described herein excludes propagating signals. Examples of computer-readable storage memory include volatile memory and non-volatile memory, fixed and removable media devices, and any suitable memory device or electronic data storage that maintains data for computing device access. The computer-readable storage memory can include various implementations of random access memory (RAM), read-only memory (ROM), flash memory, and other types of storage memory in various memory device configurations.

The computer-readable storage memory 1412 provides storage of the device data 1406 and various device applications 1414, such as an operating system that is maintained as a software application with the computer-readable storage memory and executed by the processing system 1410. The device applications may also include a device manager, such as any form of a control application, software application, signal processing and control module, code that is native to a particular device, a hardware abstraction layer for a particular device, and so on. In this example, the device applications also include a commissioning application 1416 that implements aspects of cloud-based Thread network commissioning, such as when the example device 1402 is implemented as any of the wireless network devices described herein.

The device 1402 also includes an audio and/or video system 1418 that generates audio data for an audio device 1420 and/or generates display data for a display device 1422. The audio device and/or the display device include any devices that process, display, and/or otherwise render audio, video, display, and/or image data, such as the image content of a digital photo. In implementations, the audio device and/or the display device are integrated components of the example device 1402. Alternatively, the audio device and/or the display device are external, peripheral components to the example device. In aspects, at least part of the techniques described for cloud-based Thread network commissioning may be implemented in a distributed system, such as over a "cloud" 1424 in a platform 1426. The cloud 1424 includes and/or is representative of the platform 1426 for services 1428 and/or resources 1430.

The platform 1426 abstracts underlying functionality of hardware, such as server devices (e.g., included in the services 1428) and/or software resources (e.g., included as the resources 1430), and connects the example device 1402 with other devices, servers, etc. The resources 1430 may also include applications and/or data that can be utilized while computer processing is executed on servers that are remote from the example device 1402. Additionally, the services 1428 and/or the resources 1430 may facilitate subscriber network services, such as over the Internet, a cellular network, or Wi-Fi network. The platform 1426 may also serve to abstract and scale resources to service a demand for the resources 1430 that are implemented via the platform, such as in an interconnected device aspect with functionality distributed throughout the system 1200. For example, the functionality may be implemented in part at the example device 1402 as well as via the platform 1426 that abstracts the functionality of the cloud 1424.

Although aspects of cloud-based Thread network commissioning have been described in language specific to features and/or methods, the subject of the appended claims is not necessarily limited to the specific features or methods described. Rather, the specific features and methods are disclosed as example implementations of cloud-based Thread network commissioning, and other equivalent features and methods are intended to be within the scope of the appended claims. Further, various different aspects are described, and it is to be appreciated that each described aspect can be implemented independently or in connection with one or more other described aspects.

## Claims

1. A method of commissioning a wireless network device to a Thread network, the method comprising:
receiving, by a Thread Credential Distribution Service, TCDS, a first message requesting credentials for the Thread network;
based on the receiving the first message, sending, by the TCDS to a home graph service, a second message that requests a structure identifier;
receiving, by the TCDS, a third message that includes the structure identifier; and
based on the received structure identifier, sending a fourth message that directs the wireless network device to join the Thread network.

2. The method of claim 1, wherein the sending the fourth message comprises:
including, in the fourth message, credentials of the Thread network that are usable by the wireless network device to join the Thread network.

3. The method of claim 2, wherein the Thread network is a default Thread network for a structure.

4. The method of any one of claims 1 to 3, wherein the fourth message indicates that there is no Thread network associated with a structure, the indication directing the wireless network device to scan for active Thread networks.

5. The method of claim 4, comprising:
receiving a fifth message including credentials for a Thread network;
based on the receiving the fifth message, sending, by the TCDS, a sixth message, to the home graph service, that requests a structure identifier;
receiving, by the TCDS, a seventh message that includes the structure identifier; and
based on the receiving the seventh message, sending an eighth message that includes the structure identifier and a unique identifier associated with the wireless network device, the sending the eighth message directing the home graph service to store a relationship between the structure identifier and the unique identifier associated with the wireless network device.

6. The method of claim 5, wherein the fifth message is an UpdateThreadCredentials message, wherein the sixth message is a GetStructure message, wherein the seventh message is a Structure message, and the eighth message is an UpdateStructure message.

7. The method of any one of the preceding claims, wherein the first message is a GetThreadCredentials message, wherein the second message is a GetStructure message, and wherein the third message is a Structure message.

8. The method of claim 1, wherein the wireless network device is one of:
a border router;
a router;
a hub;
a media streaming device; or
a network-enabled television.

9. A server device comprising:
one or more processors; and
a memory comprising instructions executable by the one or more processors to implement a Thread Credential Distribution Service, TCDS, that is configured to:
receive a first message requesting credentials for a Thread network;
based on the reception of the first message, send a second message that requests a structure identifier to a home graph service;
receive a third message that includes the structure identifier; and
based on the received structure identifier, send a fourth message that directs a wireless network device to join the Thread network.

10. The server device of claim 9,
a)
wherein the instructions to send the fourth message are executable by the one or more processors to configure the TCDS to:
include, in the fourth message, credentials of the Thread network that are usable by the wireless network device to join the Thread network;
and/or
b)
wherein the fourth message indicates that there is no Thread network associated with a structure, the indication directing the wireless network device to scan for active Thread networks;
and/or
c)
the instructions executable by the one or more processors to configure the TCDS to:
receive a fifth message including credentials for a Thread network;
based on the reception of the fifth message, send a sixth message, to the home graph service, that requests a structure identifier;
receive a seventh message that includes the structure identifier; and
based on the reception of the seventh message, send an eighth message that includes the structure identifier and a unique identifier associated with the wireless network device, that directs the home graph service to store a relationship between the structure identifier and the unique identifier associated with the wireless network device;
and/or
d)
wherein the first message is a GetThreadCredentials message, where in the second message is a GetStructure message, and wherein the third message is a Structure message.

11. The server device of claim 9 or 10, wherein the instructions are executable by the one or more processors to implement a Thread Credential Distribution Service, TCDS, that is configured to perform the method of any one of claims 1 to 8.

12. A method of commissioning a Thread device to a Matter network, the method comprising:
sending, by a commissioning device, a second message to a wireless network device that directs the wireless network device to scan for Thread networks;
receiving a third message that includes a discovery response from the Thread network scan performed by the wireless network device;
sending a fourth message to a Thread Credential Distribution Service, TCDS, that includes results of the received Thread network scan;
receiving, from the TCDS, a Thread credential Universally Unique Identifier, UUID, a network identifier for a Thread network to join, and a network version;
sending a fifth message to the TCDS to request credentials for the Thread network;
receiving the credentials for the Thread network;
including the received credentials for the Thread network into a sixth message; and
sending the sixth message to the wireless network device that directs the wireless network device to join the Thread network.

13. The method of claim 12, further comprising:
sending, to the TCDS, a seventh message that directs the TCDS to update the credentials associated with the wireless network device that are stored in the TCDS.

14. The method of claim 12 or 13, further comprising:
sending, by the commissioning device, a first message to a cloud service to request a structure identifier; and
based on the sending the first message, receiving the structure identifier.

15. The method of claim 14, wherein the second message is a Matter::ScanNetworks message, wherein the third message is a Discovery Response message, wherein the fourth message is a ListThreadNetworks message, wherein the fifth message is a GetThreadCredentials message, and wherein the sixth message is a Matter::AddOrUpdateThreadNetwork message.
